# EUROPÄISCHE PATENTANMELDUNG

(11) **EP 4 722 113 A1**
(43) Veröffentlichungstag der Anmeldung: **08.04.2026**
(21) Anmeldenummer: 25206431.6
(22) Anmeldetag: 02.10.2025
(51) Int. Cl.: B65B 69/00, B65G 69/18

(54) **ANSCHLUSSVORRICHTUNG**

(30) Priorität: 04.10.2024 DE 102024128762; 24.12.2024 DE 102024139741
(71) Anmelder: Hecht Technologie GmbH, 85276 Pfaffenhofen/IIm (DE)
(72) Erfinder: PILSNER, Florian, 85276 Pfaffenhofen/Ilm (DE); HEINZINGER, Josef, 85276 Pfaffenhofen/Ilm (DE)
(74) Vertreter: Kilian Kilian & Partner mbB

(57) **Zusammenfassung**

Die Erfindung betrifft eine Anschlussvorrichtung (1) zum Anschließen einer schlauchförmigen Folie an eine Einrichtung, um ein, insbesondere pulver-/granulatförmiges, Produkt durch die schlauchförmige Folie hindurch in und/oder aus der Einrichtung zu überführen, wobei die Anschlussvorrichtung (1) aufweist:
einen Grundkörper (2), der einen Kanal (21) ausbildet, durch den das Produkt bei dem Überführen strömt, wobei der Kanal (21) sich entlang einer Kanalachse (A) erstreckt und an einer Öffnung des Grundkörpers (20) endet und nach Außen mündet;
eine verstellbare Dichteinrichtung (4), die verstellbar ist zwischen (i) einer Anschlussstellung, in der sie von dem Grundkörper (2) beabstandet ist und ein Überziehen der schlauchförmigen Folie über den Grundkörper (2) zulässt, und (ii) einer Dichtstellung, in der sie die über den Grundkörper (2) gezogene schlauchförmige Folie zur Überführung des Produktes gegenüber dem Grundkörper (2) abdichtet; und
eine Klemmeinrichtung (3), die den Grundkörper (2) umläuft und eingerichtet ist, die über den Grundkörper (2) gezogene schlauchförmige Folie in einem Klemmbereich abgedichtet festzuklemmen, indem sie die schlauchförmige Folie in dem Klemmbereich ohne Verlaufsänderung flach an den Grundkörper (2) drückt; wobei
die verstellbare Dichteinrichtung (4) in eine sich zwischen der Anschlussstellung und der Dichtstellung befindende Zwischenstellung verstellbar ist, in der sie die über den Grundkörper (2) gezogene schlauchförmige Folie ohne Verlaufsänderung derart auf einen in der Klemmeinrichtung (3) festgeklemmten Folienrest, der von einer vorangegangenen Überführung stammt, drückt, dass der Folienrest an dem Grundkörper anliegt und nach Lösen der Klemmeinrichtung (3) bevorzugt manuell in den Kanal (21) gezogen werden kann.

## Beschreibung

Die Erfindung betrifft eine Anschlussvorrichtung zum Anschließen einer schlauchförmigen Folie an eine Einrichtung, um ein, insbesondere pulver-/granulatförmiges, Produkt durch die schlauchförmige Folie hindurch in und/oder aus der Einrichtung zu überführen.

Aus der Druckschrift WO 2015/027350 A1 ist eine Vorrichtung zum Umfüllen von Prozessmaterial zwischen einem ersten Behältnis und einem zweiten Behältnis bekannt.

Die Vorrichtung beinhaltet einen ersten Spanner, in dem ein Linerrest, der von einem bereits entleerten Behältnis stammt, festgespannt ist. Der Linerrest wird bei Anschluss eines neuen Behältnisses manuell durch einen seitlichen Eingriff hindurch herausgezogen, bevor eine in einem zweiten Spanner festgeklemmte, neue Linerfolie eines neuen Behältnisses axial in den ersten Spanner eingefalzt wird.

Das manuelle Herausziehen des eingefalzten Linerrestes durch den seitlichen Eingriff hindurch erfordert überaus viel Kraft und ist damit für den Anwender beschwerlich.

Dies liegt daran, dass der eingefalzte Verlauf des Linerrestes einen mechanischen Widerstand darstellt und das Herausziehen kraftaufwendig ist. Diese Problematik verschärft sich insbesondere weiter, wenn der Linerrest beschichtet, beispielsweise aluminiumkaschiert ist und eine erhöhte Eigensteifigkeit aufweist.

Vor diesem Hintergrund ist es Aufgabe der Erfindung, eine anwenderfreundlichere Anschlussvorrichtung zu schaffen. Zumindest ist es Aufgabe der Erfindung, eine zum Stand der Technik alternative Anschlussvorrichtung zu schaffen.

Diese Aufgabe(n) löst eine Anschlussvorrichtung gemäß Anspruch 1. Bevorzugte Ausführungsformen sind Gegenstand der Unteransprüche.

*Eine erfindungsgemäße Anschlussvorrichtung zum Anschließen einer schlauchförmigen Folie an eine Einrichtung, um ein, insbesondere pulver-*/*granulatförmiges, Produkt durch die schlauchförmige Folie hindurch in und*/*oder aus der Einrichtung zu überführen, beinhaltet insbesondere:*
*einen Grundkörper, der einen Kanal ausbildet, durch den das Produkt bei dem Überführen strömt, wobei der Kanal sich entlang einer Kanalachse erstreckt und an einer Öffnung des Grundkörpers endet und nach Außen mündet;*
*eine verstellbare Dichteinrichtung, die verstellbar ist zwischen (i) einer Anschlussstellung, in der sie von dem Grundkörper beabstandet ist und ein Überziehen der schlauchförmigen Folie über den Grundkörper zulässt, und (ii) einer Dichtstellung, in der sie die über den Grundkörper gezogene schlauchförmige Folie zur Überführung des Produktes gegenüber dem Grundkörper abdichtet; und*
*eine Klemmeinrichtung, die den Grundkörper umläuft und eingerichtet ist, die über den Grundkörper gezogene schlauchförmige Folie in einem Klemmbereich abgedichtet festzuklemmen, indem sie die schlauchförmige Folie in dem Klemmbereich ohne Verlaufsänderung flach an den Grundkörper drückt; wobei*
*die verstellbare Dichteinrichtung in eine sich zwischen der Anschlussstellung und der Dichtstellung befindende Zwischenstellung verstellbar ist, in der sie die über den Grundkörper gezogene schlauchförmige Folie ohne Verlaufsänderung derart auf einen in der Klemmeinrichtung festgeklemmten Folienrest, der von einer vorangegangenen Überführung stammt, drückt, dass der Folienrest an dem Grundkörper anliegt und nach Lösen der Klemmeinrichtung bevorzugt manuell in den Kanal gezogen werden kann.*

Die Klemmeinrichtung ist eingerichtet, die schlauchförmige Folie ohne Verlaufsänderung festzuklemmen. Hierrunter ist zu verstehen, dass das Festklemmen ohne Einfalzen und/oder Einschnüren der Folie erfolgt.

Insbesondere erfolgt das Festklemmen der Folie, derart, dass die Folie in der Klemmung ihren geradlinigen Verlauf beibehält. Das bedeutet, dass keine in Bezug auf die Kanalachse axial wirkenden Klemmeinrichtungen, in die die Folie zur Klemmung eingeschnürt wird, oder in Bezug auf die Kanalachse radial wirkenden Klemmeinrichtungen, in die die Folie eingefalzt wird, vorgesehen sind.

Damit ist das Ziehen des Folienrestes in den Kanal für einen Anwender stark erleichtert, weil keine radialen Einschnürungen und keine axialen Einfalzungen, die mechanische Widerstände bilden, manuell gelöst werden müssen.

Das Ziehen des Folienrestes in den Kanal erfolgt beispielsweise über einen seitlichen Eingriff.

Das Andrücken der über den Grundkörper gezogenen Folie an den Folienrest erfolgt insbesondere zu einem solchen Grad, dass der Folienrest derart an dem Grundkörper anliegt, dass das Ziehen/Entfernen des Folienrestes kontaminationsfrei erfolgt.

Das Andrücken der über den Grundkörper gezogenen Folie an den Folienrest ist außerdem so stark, dass nach Entfernen des Folienrestes die über den Grundkörper gezogene Folie unmittelbar an den Grundkörper gedrückt wird.

Die schlauchförmige Folie ist beispielsweise Teil eines Behälters, in dem das pulver-/granulatförmige Produkt enthalten ist und der in die Einrichtung entleert wird.

Alternativ kann die schlauchförmige Folie Teil eines Behälters sein, in den das pulver-/granulatförmige Produkt aus der Einrichtung gefüllt wird.

In beiden Fällen kann die schlauchförmige Folie entweder integraler Bestandteil des Behälters sein oder alternativ ein schlauchförmiges Folienstück sein, das einerseits an dem Behälter und andererseits an der Einrichtung befestigt wird.

Besonders bevorzugt ist die schlauchförmige Folie integraler Bestandteil eines Bigbags und bildet den Ein- und/oder Auslauf des Bigbags.

*Bevorzugt ist die Anschlussvorrichtung aufgebaut, wobei*
*die schlauchförmige Folie ausschließlich durch die Dichteinrichtung gehalten wird, wenn sich die Dichteinrichtung in der Zwischenstellung befindet und die schlauchförmige Folie auf den Folienrest drückt, und*
*die schlauchförmige Folie in dem Klemmbereich durch die Klemmeinrichtung bestimmungsgemäß festgeklemmt wird, nachdem der Folienrest in den Kanal gezogen wurde.*

Bestimmungsgemäß wird nach dem Entfernen des Folienrestes die über den Grundkörper gezogene Folie in dem Klemmbereich durch die Klemmeinrichtung ohne Verlaufsänderung festgeklemmt, wobei dieses Festklemmen vor oder nach dem Verstellen der Dichteinrichtung in die Dichtstellung erfolgen kann.

*Bevorzugt ist die Anschlussvorrichtung aufgebaut, wobei die Dichteinrichtung in der Zwischenstellung die - über den Grundkörper gezogene - schlauchförmige Folie radial und*/*oder axial zur Kanalachse auf den Folienrest drückt.* Beispielsweise kann die im Folgenden noch erläuterte Dichtlippe die schlauchförmige Folie radial und/oder axial zur Kanalachse auf den Folienrest drücken.

*Bevorzugt ist die Anschlussvorrichtung aufgebaut, wobei*
*die Dichteinrichtung aufweist (i) einen Dichtring, der in der Dichtstellung der Dichteinrichtung die schlauchförmige Folie radial und*/*oder axial zur Kanalachse gegenüber dem Grundkörper abdichtet, und (ii) einen in einem Abstand zu dem Dichtring gehaltenen Streifring, der die schlauchförmige Folie bei Verstellen der Dichteinrichtung in die Zwischenstellung über den Folienrest streift und auf den Folienrest drückt.*

Die Dichteinrichtung ist insbesondere so ausgestaltet, dass der Anwender die schlauchförmige Folie durch den Dichtring und den Streifring hindurchführt, bevor er die schlauchförmige Folie über den Grundkörper und den hieran befestigten Folienrest zieht.

*Bevorzugt ist die Anschlussvorrichtung aufgebaut, wobei*
*der Streifring bei Verstellen der Dichteinrichtung in die Zwischenstellung die schlauchförmige Folie axial zur Kanalachse über den Folienrest streift und radial zur Kanalachse auf den Folienrest drückt, und*
*der Dichtring die schlauchförmige Folie durch Verstellen der Dichteinrichtung von der Zwischenstellung in die Dichtstellung axial zur Kanalachse gegenüber einer Stirnseite der Öffnung abdichtet.*

Der Dichtring weist hierfür bevorzugt eine Dichtung auf, die der genannten Stirnseite der Öffnung in den Grundkörper zugewandt ist.

*Bevorzugt ist die Anschlussvorrichtung derart aufgebaut, dass der Streifring axial zur Kanalachse relativ zu dem Dichtring versetzbar ist und bei Verstellen der Dichteinrichtung von der Zwischenstellung in die Dichtstellung ortsfest bleibt.*

*Bevorzugt ist die Anschlussvorrichtung derart aufgebaut, dass der Grundkörper zumindest von dem Klemmbereich bis zu der Öffnung eine ausschließlich parallel zu der Kanalachse verlaufende Außenoberfläche besitzt, auf die die Dichteinrichtung den Folienrest in der Zwischenstellung mittelbar über die schlauchförmige Folie drückt und auf die die Klemmeinrichtung die schlauchförmige Folie in dem Klemmbereich ohne Verlaufsänderung andrückt.*

Insbesondere sind in diesem Zusammenhang auf der Außenoberfläche und der Stirnseite der Öffnung keine Ausnehmungen, wie Schlitze oder Vertiefungen gebildet, in denen die schlauchförmige Folie festgeklemmt wird.

*Bevorzugt ist die Anschlussvorrichtung aufgebaut, wobei*
*die Klemmeinrichtung ein Spannband oder eine Sackklemme ist, das*/*die die schlauchförmige Folie flach an den Grundkörper drückt.*

Das Spannband kann ein elastisches Band sein, dass mittels einer Schnalle geöffnet und geschlossen werden kann.

Die alternative Sackklemme ist bevorzugt aus einer Vielzahl von Schwenkarmen aufgebaut. Beispielsweise besitzt die Sackklemme zwei oder drei Schwenkarme, die an eine Außenkontur des Grundkörpers angepasst sind und die mittels Gelenken miteinander verbunden sind. Die Sackklemme ist bevorzugt so gelagert, dass sie in einer Ebene senkrecht zu der Kanalachse geöffnet und geschlossen werden kann.

Im Folgenden wird eine bevorzugte Ausführungsform der Erfindung unter Bezug auf die beigefügten Figuren beschrieben.
**Figur 1a** zeigt eine erfindungsgemäße Anschlussvorrichtung in einer perspektivischen Ansicht, wobei sich eine Dichteinrichtung in einer Dichtstellung befindet, in der sie eine nicht gezeigte schlauchförmige Folie abdichtet.
**Figur 1b** zeigt die erfindungsgemäße Anschlussvorrichtung, wobei sich die Dichteinrichtung in einer Anschlussstellung befindet, in der sie das Anschließen einer neuen schlauchförmigen Folie zulässt.
**Figur 2a** zeigt die erfindungsgemäße Anschlussvorrichtung, wobei sich die Dichteinrichtung in einer Zwischenstellung befindet, in der sie die schlauchförmige Folie auf einen Folienrest drückt.
**Figur 2b** zeigt den in Figur 2a eingekreisten Bereich in einer vergrößerten Darstellung.
**Figur 3a** zeigt die erfindungsgemäße Anschlussvorrichtung, wobei sich die Dichteinrichtung in einer Dichtstellung befindet, in der sie die schlauchförmige Folie an einer Öffnung abdichtet.
**Figur 3b** zeigt den in Figur 3a eingekreisten Bereich in einer vergrößerten Darstellung.
**Figur 4** zeigt eine erfindungsgemäße, modifizierte Anschlussvorrichtung in einer perspektivischen Ansicht, wobei die Modifikation der gezeigten Anschlussvorrichtung, gegenüber der aus Figuren 1a bis 3b, darin besteht, dass die Dichteinrichtung und die Klemmeinrichtung anders aufgebaut sind.
**Figuren 5a bis 5e** zeigen die erfindungsgemäße, modifizierte Anschlussvorrichtung in Schnittansichten, wobei Figur 5a die modifizierte Anschlussvorrichtung analog zu Figur 1b in einer Anschlussstellung zeigt, Figuren 5b und 5c die modifizierte Anschlussvorrichtung analog zu Figuren 2a und 2b in einer Zwischenstellung zeigen, und Figuren 5d und 5e die modifizierte Anschlussvorrichtung analog zu Figuren 3a und 3b in einer Dichtstellung zeigen.
**Figuren 6a bis 7b** zeigen die modifizierte Anschlussvorrichtung in einer Schnittansicht mit einer Schnittebene, die senkrecht zu den Schnittebenen aus Figuren 5a bis 5e verläuft und sich zwischen der Klemmeinrichtung und der Dichteinrichtung befindet, wobei die Klemmeinrichtung in Figur 6a/6b geöffnet ist und in Figur 7a/7b geschlossen ist.

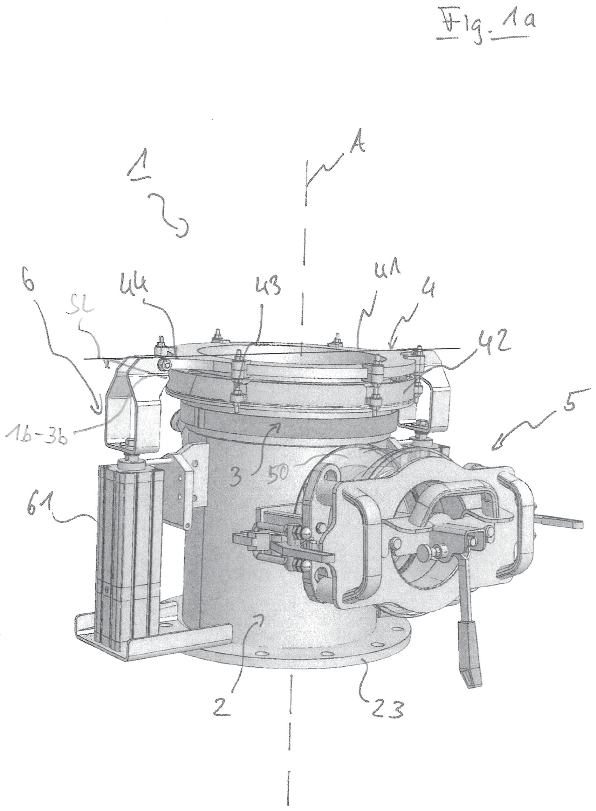

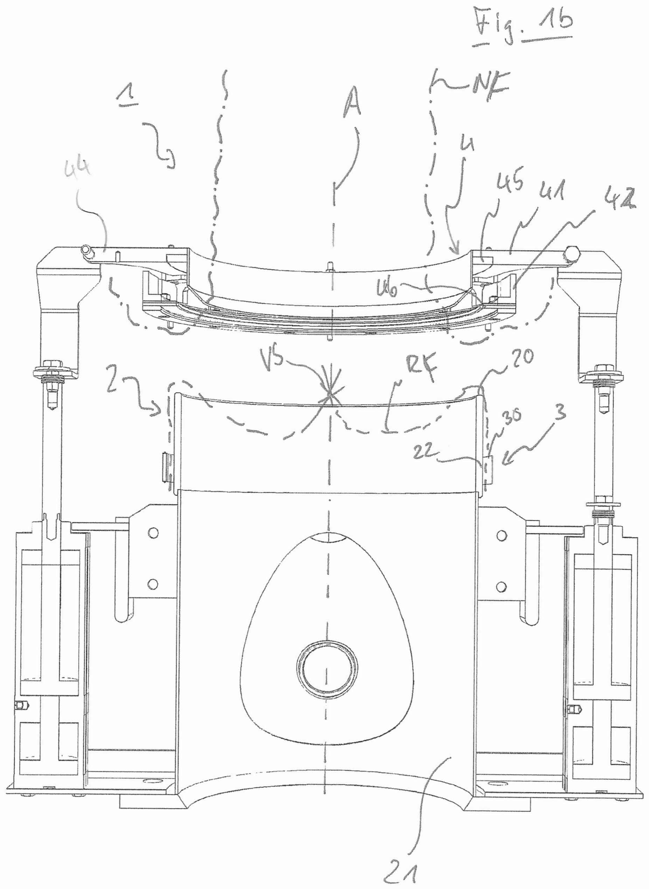

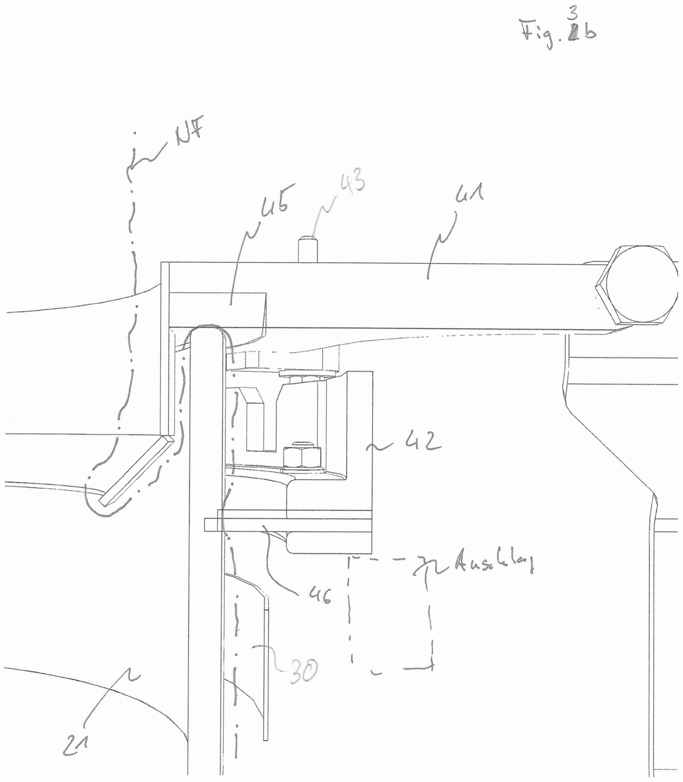

In Figur 1a ist eine erfindungsgemäße Anschlussvorrichtung 1 in einer perspektivischen Ansicht dargestellt. Die weiteren Figuren 1b und 3b zeigen die Anschlussvorrichtung 1 in einer Schnittansicht, wobei die entsprechende Schnittebene durch eine in Figur 1a gezeigte Schnittlinie SL und eine Kanalachse A aufgespannt wird. Die den Figuren 1b bis 3b entsprechende Blickrichtung ist in Figur 1a ebenfalls eingezeichnet und mit 1b-3b bezeichnet.

Die Anschlussvorrichtung 1 beinhaltet einen Grundkörper 2, eine Klemmeinrichtung 3, eine Dichteinrichtung 4 und einen seitlichen Eingriff 5.

Die Dichteinrichtung 4 ist bevorzugt über eine Führungseinrichtung/Hubeinrichtung 6 verstellbar und in Figur 1a maximal an den Grundkörper 2 herangefahren. Diese Stellung der Dichteinrichtung 4 entspricht einer Dichtstellung, die im Folgenden noch detaillierter beschrieben werden wird.

Die Anschlussvorrichtung 1 dient erfindungsgemäß zum Anschließen einer schlauchförmigen Folie an eine Einrichtung, um beispielsweise einen Behälter mit der Einrichtung zu verbinden.

In der Schüttgüter herstellenden Industrie werden beispielsweise pulver-/granulatförmige Produkte aus Einrichtungen, wie Produktionsanlagen oder Silos, in Behälter, wie beispielsweise sogenannte BigBags oder Fässer gefüllt.

Die gefüllten Behälter werden anschließend auf Seiten der Schüttgüter verarbeitenden Industrie in Einrichtungen, wie beispielsweise Verarbeitungsanlagen oder Silos, entleert, um das Produkt einer weiteren Verarbeitung zu unterziehen oder für eine spätere Verarbeitung zu speichern.

In beiden Vorgängen, d.h. bei der Befüllung und/oder Entleerung, werden die Behälter mit der entsprechenden Einrichtung vorzugsweise über eine schlauchförmige Folie verbunden. Die schlauchförmige Folie kann Teil des Behälters selbst oder eine einfache schlauchförmige Verbindungsfolie sein, die sich zwischen dem Behälter und der Einrichtung erstreckt.

Beispielsweise kann es sich bei der schlauchförmigen Folie um den Einlass/Auslass eines BigBags oder um den Einlass/Auslass eines Innensackes eines Fasses handeln. Die erfindungsgemäße Anschlussvorrichtung 1 erlaubt ein zuverlässiges und sicheres Anschließen einer solchen schlauchförmigen Folie und ist insbesondere eine Anschlussvorrichtung zum Befüllen und/oder Entleeren von Behältern.

### (Grundkörper 2)

Der konstruktive Aufbau des Grundkörpers wird unter Bezug auf die Figuren 1a und 1b erläutert.

Der Grundkörper 2 bildet in seinem Innenraum einen Kanal 21 aus, der sich entlang der bereits genannten Kanalachse A erstreckt. Der Grundkörper 2 ist beispielsweise aus einem Metall gefertigt. Die Kanalachse A entspricht der Längsachse des Grundkörpers 2. Der Durchmesser des Kanals 21 beträgt beispielsweise 0,3m, 0,4m, 0,5m.

Bei bestimmungsgemäßer Verwendung der erfindungsgemäßen Anschlussvorrichtung 1 kann das Produkt in Richtung der Kanalachse A durch den Grundkörper 2 bzw. den Kanal 21 hindurch überführt werden.

Der Kanal 21 mündet an einem Anschlussende der Anschlussvorrichtung 1, an dem die schlauchförmige Folie bestimmungsgemäß anzuschließen ist, über eine Öffnung 20 des Grundkörpers 2 in die Außenumgebung der Anschlussvorrichtung 1.

An einem entgegengesetzten Ende des Grundkörpers 2 befindet sich ein Montageflansch 23, über den die Anschlussvorrichtung 1 an der entsprechenden Einrichtung, beispielsweise mittels Schraubverbindungen, befestigt werden kann. Der Grundkörper 2 kann für die Befestigung an der Einrichtung auch anders aufgebaut sein; beispielsweise kann der Grundkörper 2 per Schellenverbindung, wie Tri-clamp-Schellen, oder per Rohrkupplungen oder Muffenverbindungen, wie BMF-Verbindungen, an der Einrichtung befestigt werden. Der Kanal 21 mündet an dem entgegengesetzten Ende nach Montage der Anschlussvorrichtung 1 in die genannte Einrichtung.

Die Anschlussvorrichtung 1 beinhaltet zudem einen seitlichen Eingriff 5, der an dem Grundkörper 2 ausgebildet ist. Der seitliche Eingriff 5 dient dazu, einen Folienrest RF, der von einer zuvor angeschlossenen schlauchförmigen Folie stammt, zu entfernen.

Damit das Entfernen des Folienrests RF kontaminationsfrei durchgeführt werden kann, ermöglicht der seitliche Eingriff 5 das Befestigen eines Foliensackes oder bevorzugt einer Endlosschlauchfolie 50. Alternativ kann an dem seitlichen Eingriff 5 ein elastischer Handschuh befestigt sein.

Ein Anwender kann die Endlosschlauchfolie 50 streckenweise von dem seitlichen Eingriff 5 abziehen und hierdurch in den Grundkörper 2 durch den seitlichen Eingriff 5 hindurch eingreifen, um den genannten Folienrest RF nach Lösen der weiter unten erläuterten Klemmeinrichtung 3 in den Kanal 21 und, von dort, aus dem Grundkörper 2 in die abgezogene Endlosfolie zu ziehen.

Der in der Endlosfolie 50 befindliche Folienrest RF wird darin durch einen ersten Verschluss eingeschlossen. Anschließend kann ein zweiter Verschluss gesetzt werden. Zur Entsorgung des Folienrests RF wird die Endlosschlauchfolie 50 zwischen dem ersten und zweiten Verschluss durchtrennt.

Der seitliche Eingriff 5 kann bevorzugt durch einen Deckel 51 verschlossen werden, der dafür sorgt, dass sich kein Produkt in dem seitlichen Eingriff 5 ansammelt.

### (Klemmeinrichtung 3)

Die Klemmeinrichtung 3 dient insbesondere zur Befestigung und Abdichtung einer anzuschließenden schlauchförmigen Folie. Die Klemmeinrichtung 3 ist ein in Figur 1a gezeigtes Spannband oder, wie weiter unten erläutert, alternativ eine gehalterte Sackklemme, die jeweils an einem entsprechenden Verschluss geöffnet und geschlossen werden können.

Die Klemmeinrichtung 3, insbesondere das gezeigte Spannband oder die später erläuterte Sackklemme, ist so ausgestaltet, dass sie den Grundkörper 2 vollständig umläuft und die schlauchförmige Folie mit einer flachen Klemmfläche 30 in einem Klemmbereich ohne Verlaufsänderung flach an eine Außenoberfläche 22 des Grundkörpers 2 drückt.

Die Außenoberfläche 22 des Grundkörpers 2 verläuft von dem Klemmbereich bis zu der Öffnung 20 bevorzugt ausschließlich geradlinig, insbesondere parallel, zu der Kanalachse A und ist damit vollständig glatt ausgebildet.

### (Dichteinrichtung 4)

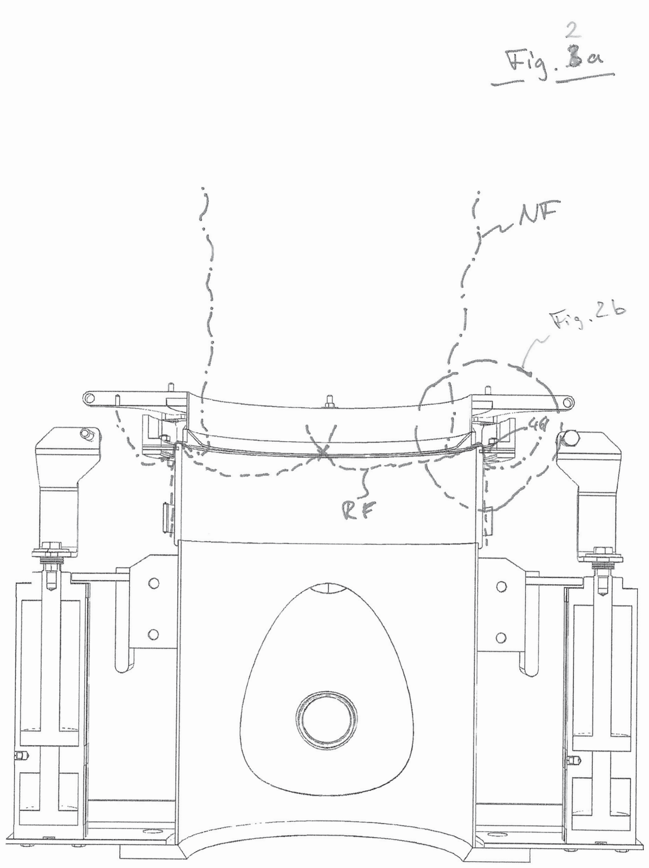

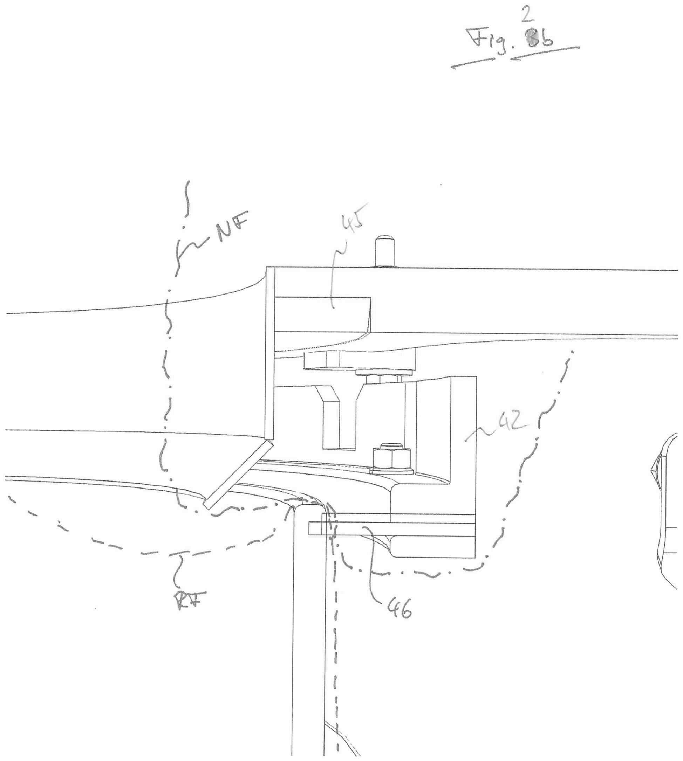

Die erfindungsgemäße Anschlussvorrichtung 1 beinhaltet ferner die Dichteinrichtung 4, die im Folgenden unter Bezug auf Figuren 2a und 2b beschrieben wird.

Die Dichteinrichtung 4 weist einen Dichtring 41 und einen Streifring 42 auf.

Der Dichtring 41 trägt auf der der Öffnung 20 des Grundkörpers 2 zugewandten Seite eine Dichtung 45, die die schlauchförmige Folie gegenüber einer Stirnseite der Öffnung 20 abdichtet, wenn die Dichteinrichtung 4 sich in einer im Folgenden noch erläuterten Dichtstellung befindet.

Der Streifring 42 ist mit dem Dichtring 41 beispielsweise über Verbindungselemente 43 verbunden. Die Verbindungselemente 43 sind so dimensioniert ist, dass sie den Streifring 42 in einem Abstand zu dem Dichtring 41 haltern.

Der Streifring 42 trägt auf der der Kanalachse A zugewandten Seite eine Dichtlippe 46. Die Dichtlippe 46 dient dazu, eine neue anzuschließende, schlauchförmige Folie über den Folienrest RF, der durch die Klemmeinrichtung 3 festgeklemmt ist, zu streifen. Die entsprechende Funktion wird im Folgenden noch im Detail erläutert.

Die Dichteinrichtung 4 ist über Führungsabschnitte 44, die in Umfangsrichtung des Dichtrings 41 in einem bestimmten Abstand zueinander ausgebildet sind, an der Führungseinrichtung 6, die beispielsweise zwei Hubzylinder 61 aufweist, befestigt. Die Hubzylinder 61 sind in Richtung der Kanalachse A beispielsweise pneumatisch verstellbar, wodurch die Dichteinrichtung 4 axial zur Kanalachse A verfahren bzw. verstellt werden kann.

Im Folgenden wird unter Bezug auf die Figuren 1b, 2a, 2b, 3a und 3b das mit der Anschlussvorrichtung 1 bestimmungsgemäße Anschließen einer schlauchförmigen Folie beschrieben.

Der beschriebene Ablauf entspricht einer Entleerung eines BigBags, wobei die Erfindung hierauf nicht beschränkt ist.

Die Dichteinrichtung 4 kann insbesondere in mindestens drei Stellungen verstellt werden.

### (Anschlussstellung bzw. Ausgangsstellung)

In Figur 1b befindet sich die Dichteinrichtung 4 in einer Ausgangsstellung bzw. Anschlussstellung, in der sie durch die Führungseinrichtung 6 von dem Grundkörper 2 bevorzugt maximal weggefahren ist.

Die Dichteinrichtung 4 befindet sich in dieser Stellung in einem solchen Abstand von dem Grundkörper 2, dass eine neue schlauchförmige Folie NF, die beispielsweise Teil des BigBags ist, durch den Dichtring 41 und den Streifring 42 hindurch über den Grundkörper 2 gezogen werden kann. In Figur 1b ist die neue schlauchförmige Folie NF nach Durchlaufen des Dichtrings 41 und des Streifrings 42 nach oben geschlagen.

Ein Folienrest RF verschließt die Öffnung 20 des Grundkörpers 2.

Der Folienrest RF stammt von einem zuvor angeschlossenen BigBag, der nach Überführung (bspw. Entleerung) des Produktes dadurch entfernt wurde, dass seine schlauchförmige Folie zweifach abgebunden und zwischen den entsprechenden Verschlussstellen durchtrennt wurde. Die an dem Folienrest RF verbleibende Verschlussstelle VS ist in Figur 1b gezeigt.

Folienrest RF ist auf der Außenoberfläche 22 in dem Klemmbereich durch die Klemmeinrichtung 3 abgedichtet festgeklemmt, indem die Klemmeinrichtung 3 den Folienrest mit ihrer flachen Klemmfläche 30 auf die Außenoberfläche 22 drückt.

### (Zwischenstellung)

Die Führungseinrichtung 6 verstellt die Dichteinrichtung 4 von der in Figur 1b gezeigten Anschlussstellung in die in Figuren 2a und 2b gezeigte Zwischenstellung.

Dieses Verstellen erfolgt durch die Führungseinrichtung 6 so weit, dass die Dichtlippe 46 den Grundkörper 2 erreicht und die neue schlauchförmige Folie NF axial zur Kanalachse A über den Folienrest RF streift. Figur 2a zeigt die erreichte Stellung der Dichteinrichtung. Die Hubzylinder 61 sind nur aus zeichnungstechnischen Gründen in ihren voll eingefahrenen Zuständen gezeigt.

Zugleich drückt die Dichtlippe 46 die neue schlauchförmige Folie NF auf den Folienrest RF, wobei der Druck insoweit ausreichend ist, dass die Dichtlippe 46 den Folienrest RF mittelbar über die neue schlauchförmige Folie NF gegen die Außenfläche 22 des Grundkörpers 2 drückt.

Der Anwender kann in der erreichten Zwischenstellung das Spannband 3 öffnen, indem er eine(n) nicht gezeigte(n) Schnalle/Verschluss öffnet/löst und in diesem Zustand, um den Grundkörper 2 herum verlaufend, hängen lässt.

Der Anwender kann in dieser Zwischenstellung nunmehr den Folienrest durch den Eingriff 5 hindurch ergreifen und, wie bereits erläutert, von der Öffnung 20 entfernen. Hierbei zieht er den Folienrest RF unter der neuen schlauchförmigen Folie NF weg, wobei die Dichtlippe 46 das Andrücken aufrechterhält. Dieser Vorgang ist für den Anwender leichtgängig und erfordert nicht viel Kraft, da die Restfolie auf der Außenoberfläche 22 geradlinig verläuft und durch das Spannband 3 nur flach angedrückt wurde.

Der Anwender kann anschließend das Spannband 3a wieder schließen und dadurch die neue schlauchförmige Folie NF in dem Klemmbereich an die Außenoberfläche 22 des Grundkörpers 2 abgedichtet drücken, wobei die Klemmfläche 30 des Spannbandes 3 die neue schlauchförmige Folie NF auf der Außenoberfläche 22 abgedichtet festklemmt.

### (Dichtstellung)

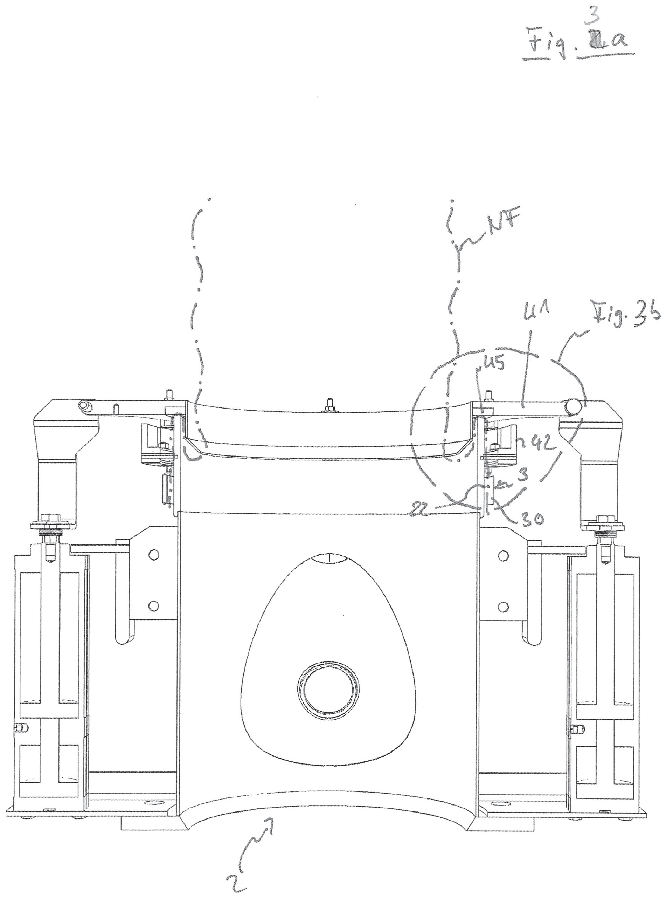

Hiernach verstellt die Führungseinrichtung die Dichteinrichtung 4 in die in Figuren 3a und 3b gezeigte Dichtstellung, wobei die Dichtung 45 des Dichtringes 41 die neue schlauchförmige Folie gegen die Stirnseite der Öffnung 20 des Grundkörpers 2 abgedichtet drückt.

Das Schließen des Spannbandes 3 und das damit erfolgende Festklemmen der neuen schlauchförmigen Folie NF kann auch erst in dem jetzt erreichten Zustand erfolgen.

In einer lediglich bevorzugten Variante ist der Streifring 42 zu dem Dichtring 41 relativ versetzbar gehaltert, wobei er in der Zwischenstellung der Dichteinrichtung 4 an einem Anschlag (Fig. 3b) anschlägt. Das führt dazu, dass der Streifring 42 bei Verstellen der Dichteinrichtung 4 von der Zwischenstellung in die Dichtstellung ortsfest bleibt und die schlauchförmige Folie bis Erreichen der Dichtstellung nicht nach außen gezogen wird.

Anschließend kann der BigBag geöffnet werden, um das darin aufgenommene Produkt in die Einrichtung zu überführen. Nach Entleerung des BigBags wird die schlauchförmige Folie zweifach abgebunden und durchtrennt.

Daraufhin kehrt der Ablauf zu Figur 1b zurück für den Anschluss eines neuen Behälters.

Hervorzuheben ist, dass die Klemmung durch die Klemmeinrichtung 3, das bevorzugt abgedichtete Andrücken durch die Dichtlippe 46 und das Abdichten durch die Dichtung 45 ohne Verlaufsänderung der Folie flach erfolgt. Es sind insbesondere keine Klemmeinrichtungen vorgesehen, in denen die Folie (NF/RF) gefaltet oder eingefalzt festgeklemmt sind.

Damit ist das Herausziehen des Folienrestes RF durch den Eingriff 5 hindurch für den Anwender sehr erleichtert, weil keine radialen Einschnürungen oder axiale Einfalzungen, die Widerstände bilden, manuell gelöst werden müssen.

### Modifikationen

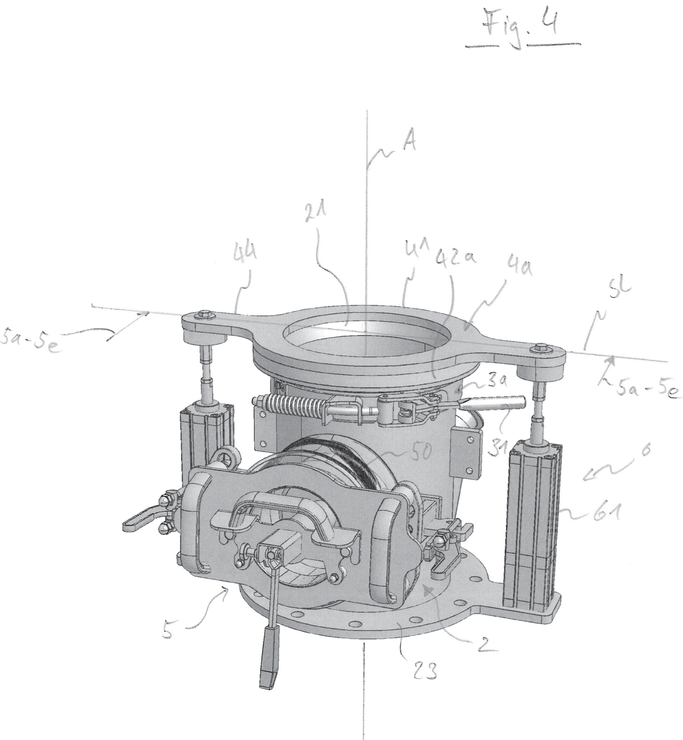

Im Folgenden wird eine Variante der erfindungsgemäßen Anschlussvorrichtung 1a unter Bezug auf Figuren 4 bis 7b erläutert, die gegenüber der Anschlussvorrichtung 1 aus Figuren 1a bis 3b modifiziert wurde.

Diejenigen Elemente der modifizierten Anschlussvorrichtung 1a, die mit denen aus Figuren 1a bis 3b identisch sind, tragen identische Bezugszeichen und werden nicht erneut erläutert.

Der Ablauf zur Entleerung eines BigBags ist mit dem aus Figuren 1b bis 3b identisch, wobei, wie bereits erwähnt, die Erfindung nicht auf eine Entleerung beschränkt ist.

Figur 4 zeigt die modifizierte Anschlussvorrichtung 1a in einer perspektivischen Ansicht, wobei die Modifikation gegenüber der Anschlussvorrichtung 1 aus Figuren 1a bis 3b darin besteht, dass die Dichteinrichtung 4a und die Klemmeinrichtung 3a andersartig aufgebaut sind.

Die Dichteinrichtung 4a besitzt keine Verbindungselemente 43, der Streifring 42a liegt an dem Dichtring 41 an. Eine Relativbewegung des Streifrings 42a relativ zu dem Dichtring 41 ist in dieser modifizierten Anschlussvorrichtung 1a ergo nicht möglich. Hingegen ist die Dichteinrichtung 4a bei der vorliegenden modifizierten Anschlussvorrichtung 1a kompakter aufgebaut, weil die Abmessungen des Streifrings 42a in Richtung der Kanalachse A geringer ausfallen.

Zudem ist die Klemmeinrichtung 3a gegenüber der Anschlussvorrichtung 1 aus Figuren 1a bis 3b anders aufgebaut. Die Klemmeinrichtung 3 ist kein Spannband, sondern als die bereits angesprochene Sackklemme 3a ausgeführt.

Die Sackklemme 3a umläuft die Außenoberfläche 22 des Grundkörpers 2 und lässt sich über einen Griff 31 sowohl öffnen als auch schließen. Der Griff 31 befindet sich gleichermaßen, wie der seitliche Eingriff 5, auf der Vorderseite der Anschlussvorrichtung 1a, sodass ein Anwender von dort aus alle Handgriffe vornehmen kann.

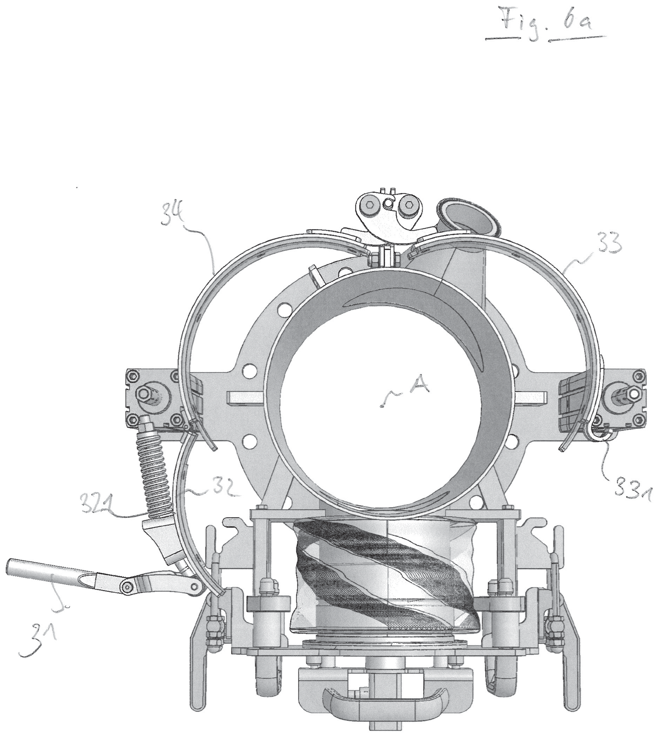

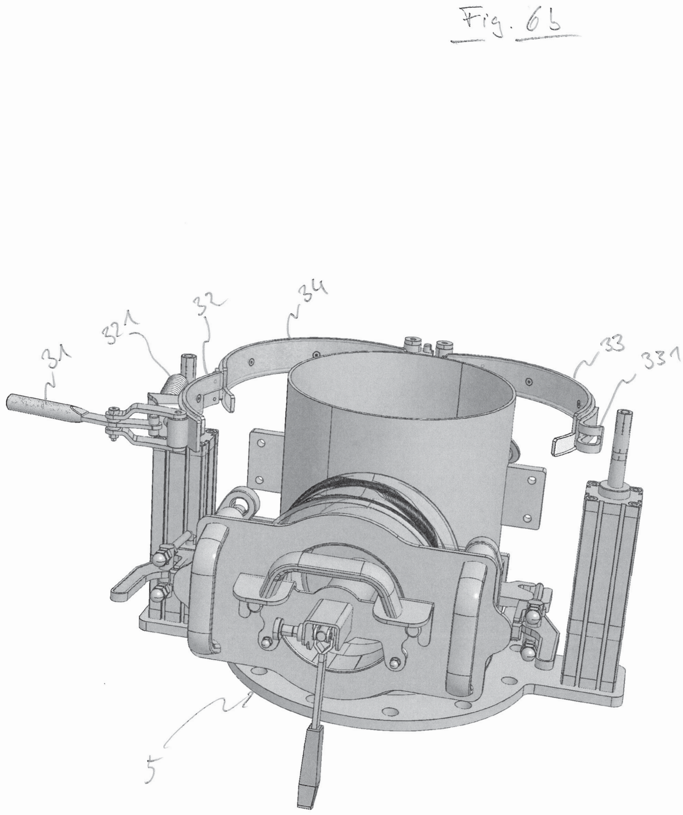

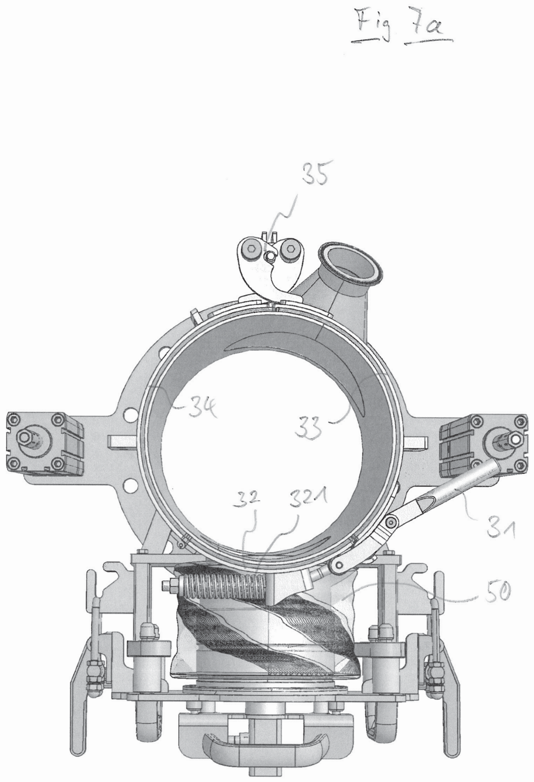

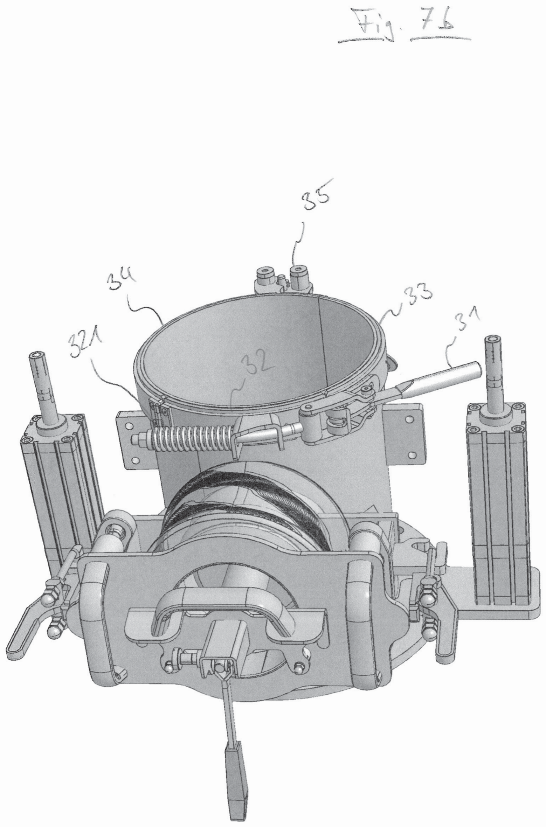

Figuren 6a, 6b, 7a, 7b zeigen Schnittansichten der Anschlussvorrichtung 1a, wobei eine entsprechende Schnittebene senkrecht zur Kanalachse A verläuft und sich zwischen der Dichteinrichtung 4a und der Sackklemme 3a befindet.

Die Sackklemme 3a ist aus bevorzugt drei Schwenkarmen 32, 33 und 34 aufgebaut, die verstellbar gelagert sind. Die Schwenkarme 32 und 34 sind über ein Gelenk miteinander verbunden, wobei der Schwenkarm 32 zudem den Griff 31 haltert und der Schwenkarm 34 an einem Schwenklager 35, das die Sackklemme 3a insgesamt trägt, schwenkbar befestigt ist.

Der verbleibende Schwenkarm 33 ist gleichermaßen, wie der Schwenkarm 34, an dem Schwenklager 35 schwenkbar befestigt.

Die Sackklemme 3a wird durch den erläuterten Aufbau derart gehaltert, dass die Schwenkarme 32, 33, 34 an den Grundkörper 2 angelegt und von diesem wegbewegt werden können.

Figuren 6a und 6b zeigen die Sackklemme 3a in ihrem geöffneten Zustand.

Ersichtlich ist hieraus, dass die drei Schwenkarme 32, 33 und 34 durch ihre verstell- und schwenkbaren Verbindungen sehr weit geöffnet werden können und der Anwender in dem geöffneten Zustand ausreichend Platz findet, um in der Zwischenstellung der Dichteinrichtung 4a die neue schlauchförmige Folie NF - nach dem Entfernen des Folienrestes RF - über den Grundkörper 2 zu ziehen.

Hiernach kann die Sackklemme 3a geschlossen werden. In einem ersten Schritt führt der Anwender die Schwenkarme 32, 33, 34 zusammen und hängt einen Haken 331 des Schwenkarmes 33 in eine entsprechende Öse einer an dem Schwenkarm 32 befestigten Spannfeder 321. Die Sackklemme 3a entwickelt nach diesem Einhängen des Hakens 331 noch keine Klemmkraft.

Dies erfolgt in einem zweiten Schritt, in dem der Anwender den Griff 31 von der in Figuren 6a, 6b gezeigten Stellung in die in Figuren 7a, 7b gezeigte Stellung umlegt. Das Umlegen des Griffes 31 führt zu einer Kompression der Spannfeder 321, die die Schwenkarme 32, 33, 34 in Umfangsrichtung um den Grundkörper 2 herum spannt und damit die Klemmkraft der Sackklemme 3a auf die neue schlauchförmige Folie NF entwickelt.

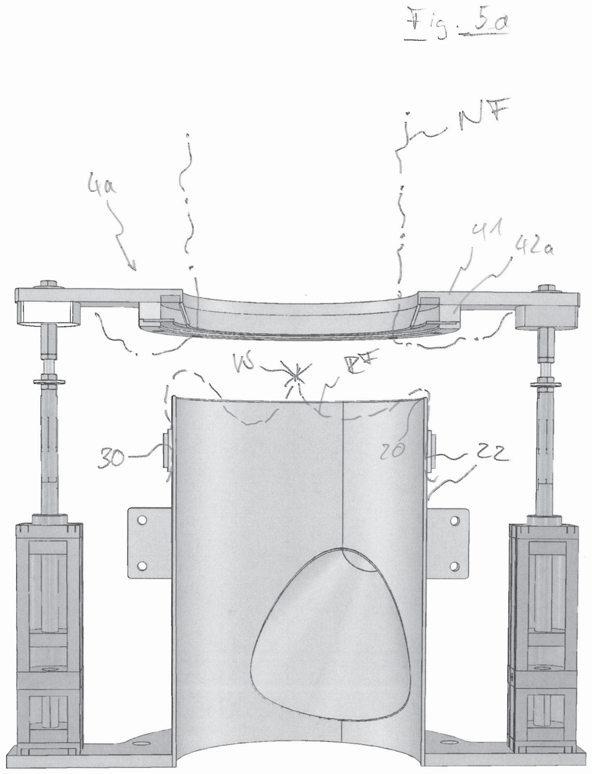

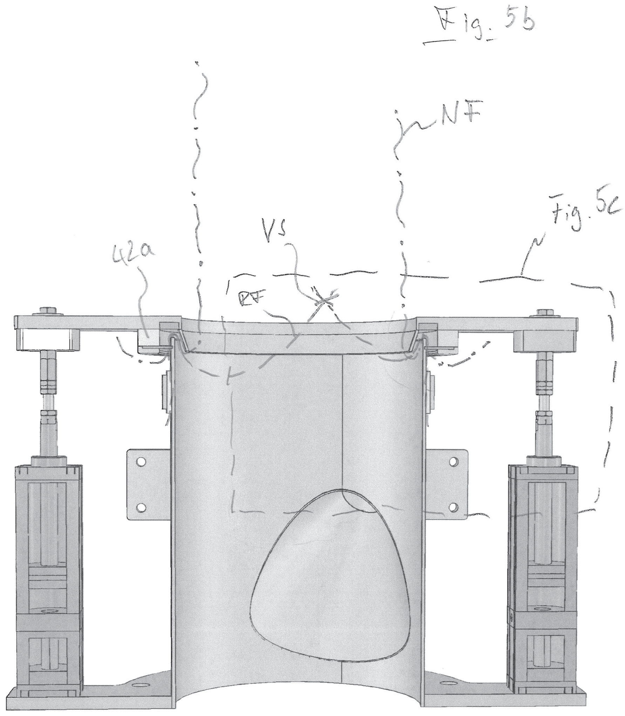

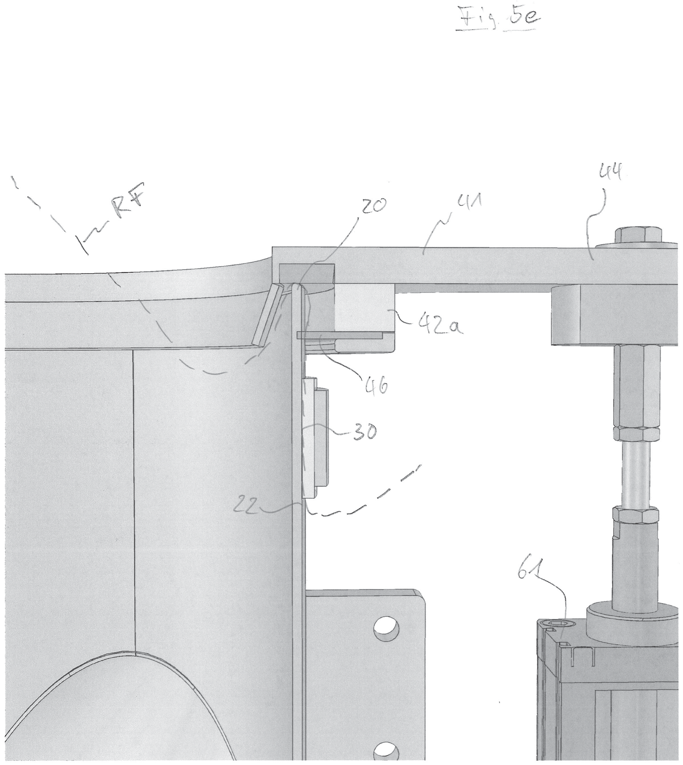

Im Folgenden wird der Ablauf zur Entleerung des BigBags unter Bezug auf Figuren 5a bis 5e erläutert.

Der Ablauf gemäß Figuren 5a bis 5e unterscheidet sich von dem gemäß Figuren 1b bis 3b nur durch die Funktionalität der Sackklemme 3a und die Anordnung des Streifringes 42a. Insoweit kann auch auf die Ausführungen zu Figuren 1b bis 3b zusätzlich zu folgenden Erläuterungen verweisen werden.

### (Anschlussstellung bzw. Ausgangsstellung)

In Figur 5a befindet sich die Dichteinrichtung 4a in der Ausgangsstellung bzw. Anschlussstellung, in der sie durch die Führungseinrichtung 6 von dem Grundkörper 2 bevorzugt maximal weggefahren ist.

Die neue schlauchförmige Folie NF, die beispielsweise Teil des BigBags ist, wird durch den Dichtring 41 und den Streifring 42a hindurch über den Grundkörper 2 gezogen. In Figur 5a ist die neue schlauchförmige Folie NF wiederum nach oben geschlagen.

Ein Folienrest RF verschließt die Öffnung 20 des Grundkörpers 2.

Der Folienrest RF stammt von einem zuvor angeschlossenen BigBag, der nach Überführung (bspw. Entleerung) des Produktes dadurch entfernt wurde, dass seine schlauchförmige Folie zweifach abgebunden und zwischen den entsprechenden Verschlussstellen durchtrennt wurde. Die an dem Folienrest RF verbleibende Verschlussstelle VS ist in Figur 5a gezeigt.

Der Folienrest RF ist auf der Außenoberfläche 22 in dem Klemmbereich durch die Sackklemme 3a abgedichtet festgeklemmt, indem die Sackklemme 3a den Folienrest mit ihrer flachen Klemmfläche 30 auf die Außenoberfläche 22 drückt.

### (Zwischenstellung)

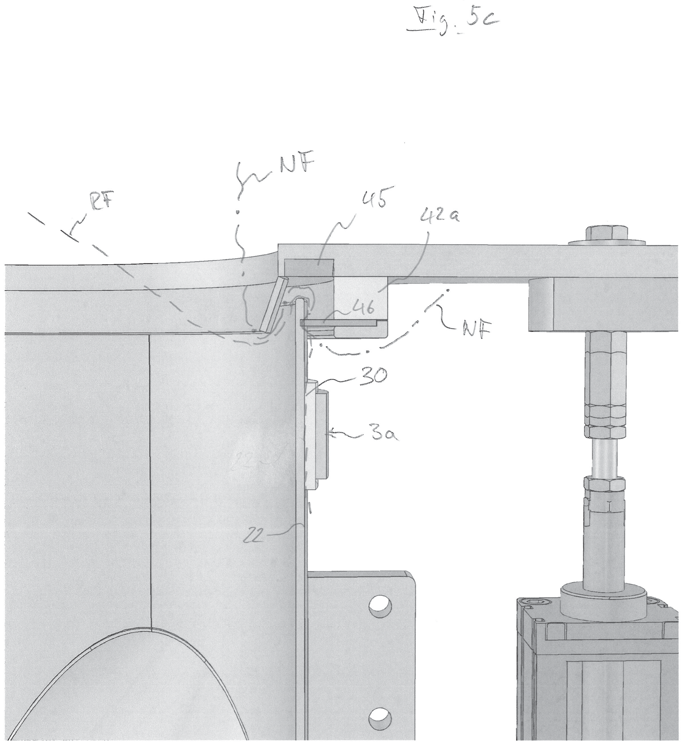

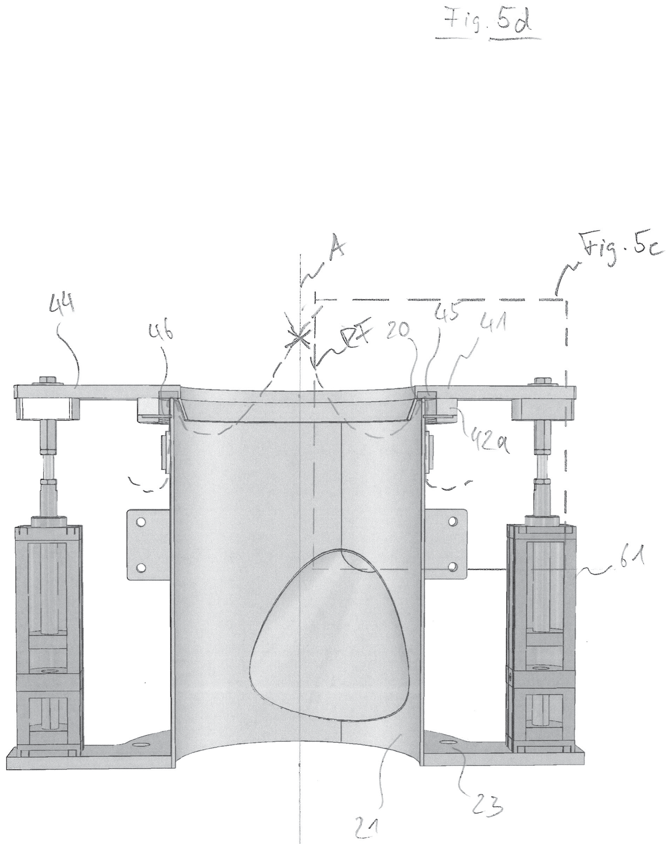

Die Führungseinrichtung 6 verstellt die Dichteinrichtung 4 von der in Figur 5a gezeigten Anschlussstellung in die in Figuren 5d und 5c gezeigte Zwischenstellung. Dieses Verstellen erfolgt durch die Führungseinrichtung 6 so weit, dass der Streifring 42a und die Dichtlippe 46 den Grundkörper 2 erreichen. Letztere Dichtlippe 46 streift dabei die neue schlauchförmige Folie NF axial zur Kanalachse A über den Folienrest RF.

Zugleich drückt die Dichtlippe 46 die neue schlauchförmige Folie NF auf den Folienrest RF, wobei der Druck insoweit ausreichend ist, als dass die Dichtlippe 46 den Folienrest RF mittelbar über die neue schlauchförmige Folie NF gegen die Außenfläche 22 des Grundkörpers 2 drückt.

Der Anwender kann in der erreichten Zwischenstellung die Sackklemme 3a öffnen, indem er den Griff 31 von der in Figuren 7a/7b gezeigten Stellung umlegt und den Haken 331 aus der Öse löst. Die Sackklemme 3a befindet sich hiernach in dem in Figuren 6a/6b gezeigten Zustand.

Der Anwender ergreift dann den Folienrest RF durch den Eingriff 5 hindurch und entfernt ihn, wie bereits erläutert, von der Öffnung 20, indem er den Folienrest RF unter der neuen schlauchförmigen Folie NF wegzieht, wobei die Dichtlippe 46 das Andrücken aufrechterhält. Dieses Herausziehen erfordert nur geringen Kraftaufwand.

Der Anwender kann anschließend die Sackklemme 3a wieder schließen und dadurch die neue schlauchförmige Folie NF in dem Klemmbereich an die Außenoberfläche 22 des Grundkörpers 2 abgedichtet drücken bzw. durch seine Klemmfläche 30 die neue schlauchförmige Folie NF gegenüber der Außenoberfläche 22 abgedichtet festklemmen.

### (Dichtstellung)

Anschließend verstellt der Anwender über die Führungseinrichtung 6 die Dichteinrichtung 4 in die in Figuren 3a und 3b gezeigte Dichtstellung, wobei die Dichtung 45 des Dichtringes 41 die neue schlauchförmige Folie NF gegen die Stirnseite der Öffnung 20 des Grundkörpers 2 abgedichtet drückt.

Das Schließen der Sackklemme 3a und das damit erfolgende Festklemmen der neuen schlauchförmigen Folie NF kann auch erst in dem jetzt erreichten Zustand durchgeführt werden.

Anschließend kann der BigBag geöffnet werden, um das darin aufgenommene Produkt in die Einrichtung zu überführen. Nach Entleerung des BigBags wird die schlauchförmige Folie zweifach abgebunden und durchtrennt.

Daraufhin kehrt der Ablauf zu Figur 5a zurück für den Anschluss eines neuen Behälters.

Für die modifizierte Anschlussvorrichtung 1a ist wiederum hervorzuheben, dass die Klemmung durch die Klemmeinrichtung 3 bzw, Sackklemme 3a, das bevorzugt abgedichtete Andrücken durch die Dichtlippe 46 und das Abdichten durch die Dichtung 45 ohne Verlaufsänderung der Folie flach erfolgt.

Es sind insbesondere keine Klemmeinrichtungen vorgesehen, in denen die Folien (NF/RF) gefaltet oder eingefalzt festgeklemmt sind. Damit ist das Herausziehen des Folienrestes RF durch den Eingriff 5 hindurch für den Anwender sehr erleichtert, weil keine radialen Einschnürungen oder axiale Einfalzungen, die Widerstände bilden, manuell gelöst werden müssen.

## Patentansprüche

1. Anschlussvorrichtung (1) zum Anschließen einer schlauchförmigen Folie an eine Einrichtung, um ein, insbesondere pulver-/granulatförmiges, Produkt durch die schlauchförmige Folie hindurch in und/oder aus der Einrichtung zu überführen, wobei die Anschlussvorrichtung (1) aufweist:
einen Grundkörper (2), der einen Kanal (21) ausbildet, durch den das Produkt bei dem Überführen strömt, wobei der Kanal (21) sich entlang einer Kanalachse (A) erstreckt und an einer Öffnung des Grundkörpers (20) endet und nach Außen mündet;
eine verstellbare Dichteinrichtung (4), die verstellbar ist zwischen (i) einer Anschlussstellung, in der sie von dem Grundkörper (2) beabstandet ist und ein Überziehen der schlauchförmigen Folie über den Grundkörper (2) zulässt, und (ii) einer Dichtstellung, in der sie die über den Grundkörper (2) gezogene schlauchförmige Folie zur Überführung des Produktes gegenüber dem Grundkörper (2) abdichtet; und
eine Klemmeinrichtung (3), die den Grundkörper (2) umläuft und eingerichtet ist, die über den Grundkörper (2) gezogene schlauchförmige Folie in einem Klemmbereich abgedichtet festzuklemmen, indem sie die schlauchförmige Folie in dem Klemmbereich ohne Verlaufsänderung flach an den Grundkörper (2) drückt; wobei
die verstellbare Dichteinrichtung (4) in eine sich zwischen der Anschlussstellung und der Dichtstellung befindende Zwischenstellung verstellbar ist, in der sie die über den Grundkörper (2) gezogene schlauchförmige Folie ohne Verlaufsänderung derart auf einen in der Klemmeinrichtung (3) festgeklemmten Folienrest, der von einer vorangegangenen Überführung stammt, drückt, dass der Folienrest an dem Grundkörper anliegt und nach Lösen der Klemmeinrichtung (3) bevorzugt manuell in den Kanal (21) gezogen werden kann.

2. Anschlussvorrichtung gemäß Patentanspruch 1, wobei
die schlauchförmige Folie ausschließlich durch die Dichteinrichtung (4) gehalten wird, wenn sich die Dichteinrichtung in der Zwischenstellung befindet und die schlauchförmige Folie auf den Folienrest drückt, und
die schlauchförmige Folie in dem Klemmbereich durch die Klemmeinrichtung bestimmungsgemäß festgeklemmt wird, nachdem der Folienrest in den Kanal (21) gezogen wurde.

3. Anschlussvorrichtung gemäß Patentanspruch 1 oder 2, wobei
die Dichteinrichtung (4) in der Zwischenstellung die schlauchförmige Folie radial und/oder axial zur Kanalachse (A) auf den Folienrest drückt.

4. Anschlussvorrichtung gemäß Patentanspruch 1, 2 oder 3, wobei
die Dichteinrichtung (4) aufweist (i) einen Dichtring, der in der Dichtstellung der Dichteinrichtung (4) die schlauchförmige Folie radial und/oder axial zur Kanalachse (A) gegenüber dem Grundkörper (2) abdichtet, und (ii) einen in einem Abstand zu dem Dichtring gehaltenen Streifring, der die schlauchförmige Folie bei Verstellen der Dichteinrichtung in die Zwischenstellung über den Folienrest streift und auf den Folienrest drückt.

5. Anschlussvorrichtung gemäß Anspruch 4, wobei
der Streifring bei Verstellen der Dichteinrichtung in die Zwischenstellung die schlauchförmige Folie axial zur Kanalachse über den Folienrest streift und radial zur Kanalachse auf den Folienrest drückt, und
der Dichtring die schlauchförmige Folie durch Verstellen der Dichteinrichtung von der Zwischenstellung in die Dichtstellung axial zur Kanalachse (A) gegenüber einer Stirnseite der Öffnung abdichtet.

6. Anschlussvorrichtung gemäß Anspruch 4 oder 5, wobei
der Streifring axial zur Kanalachse relativ zu dem Dichtring versetzbar ist und bei Verstellen der Dichteinrichtung von der Zwischenstellung in die Dichtstellung ortsfest bleibt.

7. Anschlussvorrichtung gemäß einem der vorangehenden Ansprüche, wobei
der Grundkörper zumindest von dem Klemmbereich bis zu der Öffnung eine ausschließlich parallel zu der Kanalachse verlaufende Außenoberfläche besitzt, auf die die Dichteinrichtung den Folienrest in der Zwischenstellung mittelbar über die schlauchförmige Folie drückt und auf die die Klemmeinrichtung die schlauchförmige Folie in dem Klemmbereich ohne Verlaufsänderung andrückt.

8. Anschlussvorrichtung gemäß einem der vorangehenden Ansprüche, wobei
die Klemmeinrichtung ein Spannband oder eine Sackklemme ist, das/die die schlauchförmige Folie flach an den Grundkörper drückt.
